# EUROPÄISCHE PATENTSCHRIFT

(11) **EP 3 401 127 B1**
(45) Veröffentlichungstag und Bekanntmachung des Hinweises auf die Patenterteilung: **29.01.2020**
(21) Anmeldenummer: 18157993.9
(22) Anmeldetag: 22.02.2018
(51) Int. Cl.: B60C 11/24

(54) **FAHRZEUGREIFEN**
VEHICLE TYRES
PNEU DE VÉHICULE

(30) Priorität: 11.05.2017 DE 102017207945
(43) Veröffentlichungstag der Anmeldung: 14.11.2018
(73) Patentinhaber: Continental Reifen Deutschland GmbH, 30165 Hannover (DE)
(72) Erfinder: Rittweger, Stefan, 30826 Garbsen (DE); Lorchheim, Andrea, 30823 Garbsen (DE); Burfien, Ralph, 30419 Hannover (DE)
(74) Vertreter: Finger, Karsten

(56) Entgegenhaltungen:
- EP-A1- 2 998 131
- KR-B1- 101 342 669

## Beschreibung

Die Erfindung betrifft ein Laufstreifenprofil eines Fahrzeugreifens - insbesondere eines Fahrzeugluftreifens - mit durch Rillen voneinander getrennten Profilelementen, wobei die Rillen in radialer Richtung R nach innen durch einen Rillengrund und die Profilelemente in radialer Richtung R nach außen durch eine die Bodenkontaktfläche bildende radial äußere Oberfläche begrenzt werden, mit Rillen, in denen wenigstens ein Abriebindikator (TWI) ausgebildet ist, wobei der Abriebindikator aus einem aus dem Rillengrund in radialer Richtung R nach außen erstreckten Gummiklotz mit einer den Gummiklotz in radialer Richtung R nach radial außen hin begrenzenden Fläche und mit einer in der Fläche ausgebildeten, eine Schwelle des Abrieb anzeigenden X-förmigen Linie ausgebildet ist.

Derartige Fahrzeugluftreifen sind bekannt. Die Abriebindikatoren (TWI) sollen dabei dem Nutzer in einfacher, gut erkennbarer Weise direkt klar und deutlich anzeigen, dass der Abrieb des Reifens so weit fortgeschritten ist, dass eine vorbestimmte Schwelle des Abriebs erreicht ist. Mit einem derartigen Abriebindikator kann dem Nutzer beispielsweise bei Sommerreifen schnell und einfach eine Schwelle angezeigt werden, unterhalb der Nassgriffeigenschaften deutlich abnehmen, und beispielsweise bei Winterreifen eine Schwelle, unterhalb der Schneegriffeigenschaften deutlich abnehmen. Auf diese Weise kann der Nutzer der Reifen selbst auch ohne besondere Messinstrumente optisch schnell erkennen, dass der Abrieb soweit fortgeschritten ist, dass wichtige Griffeigenschaften deutlich abnehmen und dass spätestens dann ein Reifenwechsel erfolgen sollte.

Besonders bewährt haben sich dabei Abriebindikatoren (TWI) - wie sie aus der DE 10 2008 021 497 A1 bekannt sind -, bei denen in der den Gummiklotz nach radial außen hin begrenzenden Fläche ein aus der Fläche nach radial außen hin erhabenes x-förmiges Kreuz ausgebildet ist. Diese erhabenen x-förmigen Kreuze sind durch sich kreuzende aus der Fläche radial hervorstehende Feinstrippen gebildet. Sobald der Abrieb so weit fortgeschritten ist, dass die Feinstrippen erreicht sind, verschwindet mit weiterem zunehmendem Abrieb die Feinstrippe und somit das Kreuz und zeigt hierdurch dem Nutzer an, dass eine kritische Schwelle erreicht ist. Der Nutzer sollte nun einen Reifenwechsel durchführen.

Die x-förmige, erhabene Feinstrippe ist dabei aufgrund ihrer x-Form aus sich kreuzenden Linien und dennoch flächengreifenden Erstreckung besonders gut und deutlich erkennbar, und auch ihr Verschwinden ist aufgrund dieser Form gut und deutlich optisch erkennbar. Die Ausbildung des Abriebindikators ist daher besonders gut geeignet, um einfach und deutlich den kritischen Abrieb anzuzeigen.

Allerdings ist die aus diesem Dokument bekannte Ausbildung der aus der Fläche in radialer Richtung nach außen hin ausgebildeten x-förmigen Ausbildung aus sich kreuzenden erhabenen Feinstrippen auch leicht beschädigbar. So können beispielsweise durch Steine und ähnliche härtere Partikel auf der Straßenoberfläche im Einsatz des Fahrzeugluftreifens unerwünschte Beschädigungen der sich kreuzenden Feinstrippen des Abriebindikators auftreten, wodurch ein vorzeitiges teilweises oder sogar vollständiges Verschwinden des eigentlichen optischen Anzeigers der kritischen Schwelle eines Abriebindikators möglich ist. Für den Nutzer kann somit vorzeitig vor Erreichen der eigentlichen Abriebschwelle die den Gummiklotz begrenzende, radial äußere Fläche bereits als reine flache Fläche ohne x angezeigt werden, so dass ein klares Erkennen der Erreichen der Abriebgrenze dieses Abriebindikators nicht mehr eindeutig gegeben ist. Die Anzeigefunktion der am Fahrzeugluftreifen ausgebildeten Abriebindikatoren kann somit unerwünscht eingeschränkt werden. Darüber hinaus ist die Einformbarkeit derartiger Abriebindikatoren mit sich kreuzenden, x-förmigen Feinstrippen schwierig, da in der Vulkanisationsform in den zur Einformbarkeit der sich kreuzenden Feinstrippen ausgebildeten, sich kreuzenden Feinstrillen in der Form Lufteinschlüsse möglich sind, die zu fehlerhafter, nicht vollständiger ausgeformter x-förmiger Feinstrippe führen können.

Aus der KR 101 342 669 B1 ist ein Laufstreifenprofil eines Fahrzeugreifens gemäß den Merkmalen des Oberbegriffs von Anspruch 1 bekannt.

Der Erfindung liegt die Aufgabe zugrunde, unter Beibehaltung der bewährten, gut herstellbaren Abriebindikatortechnologie mit Gummiklotz in der Rille und mit einem einfachen visuell erkennbaren sich bei Erreichen der Abriebschwelle veränderndem X-förmigen Abriebanzeiger dessen Anzeigequalität noch zuverlässiger zu gewährleisten.

Die Aufgabe wird erfindungsgemäß durch die Ausbildung eines Laufstreifenprofils eines Fahrzeugreifens - insbesondere eines Fahrzeugluftreifens - mit durch Rillen voneinander getrennten Profilelementen, wobei die Rillen in radialer Richtung R nach innen durch einen Rillengrund und die Profilelemente in radialer Richtung R nach außen durch eine die Bodenkontaktfläche bildende radial äußere Oberfläche begrenzt werden, mit Rillen, in denen wenigstens ein Abriebindikator (TWI) ausgebildet ist, wobei der Abriebindikator aus einem aus dem Rillengrund in radialer Richtung R nach außen erstreckten Gummiklotz mit einer den Gummiklotz in radialer Richtung R nach radial außen hin begrenzenden Fläche und mit einer in der Fläche ausgebildeten, eine Schwelle des Abrieb anzeigenden X-förmigen Linie ausgebildet ist, gemäß den Merkmalen von Anspruch 1 gelöst, bei dem die X-förmige Linie des Abriebindikators eine in der den Gummiklotz begrenzenden Fläche ausgebildete nutförmige Vertiefung ist, wobei der Gummiklotz in Umfangsichtung U des Fahrzeugreifens mit Klotzflanken begrenzt wird, welche in den senkrecht zur axialen Richtung A hin gebildeten Schnittebenen jeweils in radialer Richtung R unter Einschluss eines Neigungswinkels β zur radialen Richtung R mit 10°≤β≤ 30° aus dem Rillengrund nach außen bis zur Fläche erstrecken und dort die die Fläche in Umfangsrichtung U begrenzenden Randlinie bilden, wobei die Neigungsrichtung der beiden Klotzflanken längs deren radialer Erstreckung R nach außen hin jeweils zum Gummiklotz hin orientiert ist.

Durch diese Ausbildung wird weiterhin ermöglicht, Fahrzeugreifen mit Rillen und Abriebindikatoren zu schaffen, bei denen unter Nutzung der besonders vorteilhaften Ausbildung der Abriebindikatoren aus einem in der Umfangsrille ausgebildeten Gummiklotz mit einer in radialer Richtung nach außen hin gerichteten Begrenzungsfläche, in welcher ein x-förmiger Anzeiger des Abriebs ausgebildet ist, wobei jedoch die x-förmige Vertiefung in der Fläche einen guten Schutz gegen unerwünschte Beschädigung oder vorzeitigen Abrieb der zur Anzeige des Erreichens der Schwelle wichtigen flächengreifenden, gut erkennbaren x-förmigen Linie bietet. In die Rille eindringende Fremdkörper oder Steine wirken auf die mit höherem Widerstand ausgebildete, den Gummiklotz begrenzende Fläche, ohne jedoch den wichtigen Anzeiger selbst zu beschädigen. Somit kann die besonders gute und wirksame x-Form als Anzeiger zuverlässig und sicher so lange aufrechterhalten werden, bis der Abrieb des Reifens die definierte, anzuzeigende kritische Schwelle erreicht. Der Nutzer kann somit mit hoher Sicherheit bei Verschwinden des Kreuzes die für ihn wichtige Information entnehmen, dass die anzuzeigende kritische Schwelle - beispielsweise für Nassgriff bzw. Schneegriff - erreicht ist und ein Reifenwechsel nun erfolgen sollte. Darüber hinaus ist die kreuzförmige Vertiefung in der Fläche des Gummiklotzes einfach und zuverlässig ohne Beeinträchtigung von Lufteinschlüssen in der Vulkanisationsform ohne zusätzlichen Aufwand zur Vermeidung der Lufteinschlüsse möglich. Somit ist sowohl die Herstellung des Anzeigers als auch die Funktionsweise mit optimaler Anzeigewirkung einfach und zuverlässig umsetzbar. Durch die Ausbildung der Klotzflanken kann die Ein- und Ausformbarkeit des Indikators weiter verbessert werden.

Besonders vorteilhaft ist die Ausbildung eines Fahrzeugreifens gemäß den Merkmalen von Anspruch 2, wobei die X-förmige Linie aus zwei sich kreuzenden Nuten gebildet ist, deren Erstreckungsende jeweils mit Abstand zu die Fläche begrenzenden Rändern ausgebildet sind. Hierdurch kann besonders zuverlässig die Ausbildung von Taschen in der Vulkanisationsform, in denen sich Luft fangen könnte, vermieden werden.

Besonders vorteilhaft ist die Ausbildung eines Fahrzeugreifens gemäß den Merkmalen von Anspruch 3, wobei die Fläche im Wesentlichen rechteckig oder quadratisch ausgebildet ist und wobei die die X-Form bildenden Linien sich längs der Diagonalen des Rechtecks bzw. des Quadrats erstrecken. Diese Ausbildung hat sich im Hinblick auf optimale Raumausnutzung in der Rille und unter Bildung eines möglichst großen Kreuzes zur optimalen Erkennbarkeit besonders bewährt.

Besonders vorteilhaft ist die Ausbildung eines Fahrzeugreifens gemäß den Merkmalen von Anspruch 4, wobei die Fläche im Wesentlichen rechteckig ausgebildet ist, wobei die längere Haupterstreckungsrichtung des Rechtecks in axialer Richtung A des Fahrzeugreifens und die kürzere Haupterstreckungsrichtung des Rechtecks in Umfangsrichtung U des Fahrzeugreifens ausgerichtet ist.

Besonders vorteilhaft zur Erzielung einer optimalen Erkennbarkeit des Indikators ist die Ausbildung eines Fahrzeugreifens gemäß den Merkmalen von Anspruch 5, wobei die die X-Form bildenden, sich kreuzenden Nuten mit ihrer Erstreckungsrichtung in der Fläche jeweils unter Einschluss eines Winkels α zur Umfangsrichtung U mit 30°≤α≤60° ausgerichtet sind.

Besonders vorteilhaft ist die Ausbildung eines Fahrzeugreifens gemäß den Merkmalen von Anspruch 6, wobei der Abriebindikator (TWI) in einer Umfangsrille ausgebildet ist. Dies ermöglicht trotz enger Platzverhältnisse im Void (Negativanteil) des Laufstreifenprofils eine besonders gute Beobachtung und Überwachung des Abriebs.

Die Erfindung wird im Folgenden an Hand der in den Figuren 1 bis 5 dargestellten Ausführungsbeispiele näher erläutert. Hierin zeigen
- Fig.1: einen Umfangsabschnitt eines Laufstreifenprofils eines Pkw-Reifens in Draufsicht,
- Fig.2: eine vergrößerte Detaildarstellung eines Ausschnittes II von Fig.1 zur Erläuterung des Abriebindikators eines in einer Umfangsrille ausgebildeten Abriebindikators,
- Fig.3: die Umfangsrille von Fig.2 in perspektivischer Darstellung,
- Fig.4: die Umfangsrille mit Abriebindikator von Fig.2 in Schnittdarstellung gemäß Schnitt IV-IV von Fig.2 und
- Fig.5: die Umfangsrille mit Abriebindikator von Fig.2 in Schnittdarstellung gemäß Schnitt V-V von Fig.2

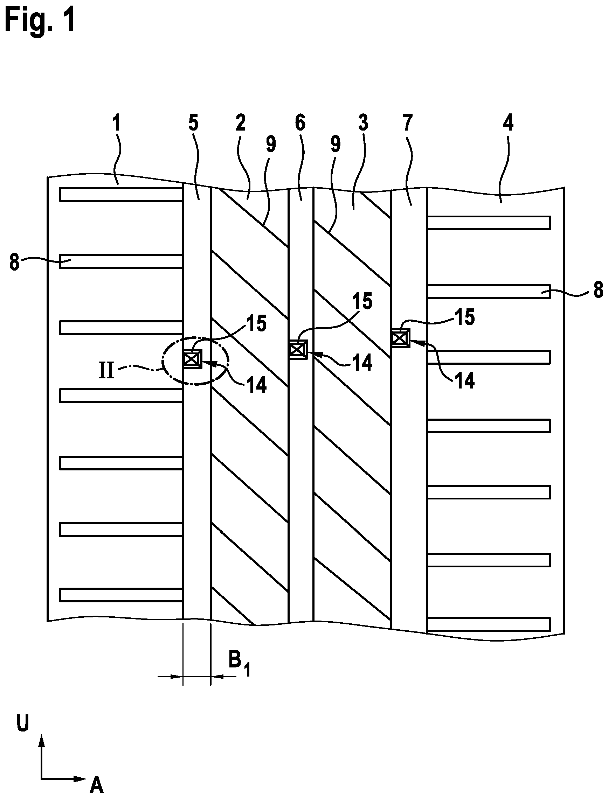

In Figur 1 ist ein Laufstreifenprofil eines Fahrzeugluftreifens eines Personenkraftwagens (Pkw) dargestellt, bei dem in bekannter Weise über den Umfang des Fahrzeugluftreifens erstreckte und in Umfangsrichtung U des Fahrzeugluftreifens ausgerichtete Profilbänder 1, 2, 3 und 4 in axialer Richtung A des Fahrzeugluftreifens nebeneinander angeordnet sind. Die Profilbänder 1 und 2 sind in axialer Richtung A des Fahrzeugluftreifens durch eine über den gesamten Umfang des Fahrzeugluftreifens erstreckte und in Umfangsrichtung U des Fahrzeugluftreifens ausgerichtete Umfangsrille 5 voneinander getrennt. Die Profilbänder 2 und 3 sind in axialer Richtung A des Fahrzeugluftreifens durch eine über den gesamten Umfang des Fahrzeugluftreifens erstreckte und in Umfangsrichtung U ausgerichtete Umfangsrille 6 voneinander getrennt. Die Profilbänder 3 und 4 sind in axialer Richtung A des Fahrzeugluftreifens durch eine über den gesamten Umfang des Fahrzeugluftreifens erstreckte und in Umfangsrichtung U ausgerichtete Umfangsrille 7 voneinander getrennt.

Die Profilbänder 1 und 4 sind jeweils in den Reifenschultern ausgebildet und bilden die Schulterprofilbänder. Die zwischen den beiden Reifenschultern ausgebildeten Profilbänder 2 und 3 sind zentral ausgebildete Profilbänder.

Im dargestellten Ausführungsbeispiel sind die Profilbänder 1, 2, 3 und 4 jeweils als Umfangsrippen ausgebildet. In anderer, nicht dargestellter Ausführung sind die Profilbänder 1, 2, 3 und 4 oder nur eines oder zwei oder drei der vier Profilbänder jeweils als Profilblockreihen bekannter Art ausgebildet und die anderen Profilbänder jeweils als Umfangsrippen.

In den Profilbändern 1 und 4 sind über den Umfang des Fahrzeugluftreifens verteilt hintereinander angeordnete Querrillen 8 ausgebildet, welche sich ausgehend von der an das jeweilige Profilband 1 bzw. 4 angrenzenden Umfangsrille 5 bzw. 7 in axialer Richtung A des Fahrzeugluftreifens nach außen hin erstrecken und außerhalb der Bodenaufstandsbreite des Reifens im jeweiligen Profilband 1 bzw.4 enden.

Die Profilbänder 2 und 3 sind beispielsweise, wie in Figur 1 dargestellt ist, mit über den Umfang des Fahrzeugluftreifens hintereinander angeordneten und über den Umfang verteilten Feineinschnitten 9 ausgebildet, welche sich unter Einschluss eines Neigungswinkels zur axialen Richtung hin durch das jeweilige Profilband 2 bzw. 3 erstrecken und in die das jeweilige Profilband begrenzenden Umfangsrillen 5,6 bzw. 6,7 münden.

Wie in den Figuren 1 bis 5 dargestellt ist, sind die Profilbänder 1, 2, 3 und 4 in radialer Richtung R nach außen hin jeweils durch eine radial äußere Oberfläche 11 begrenzt, welche innerhalb des Erstreckungsbereichs der Bodenaufstandsbreite des Fahrzeugluftreifens die Bodenkontaktfläche bildet.

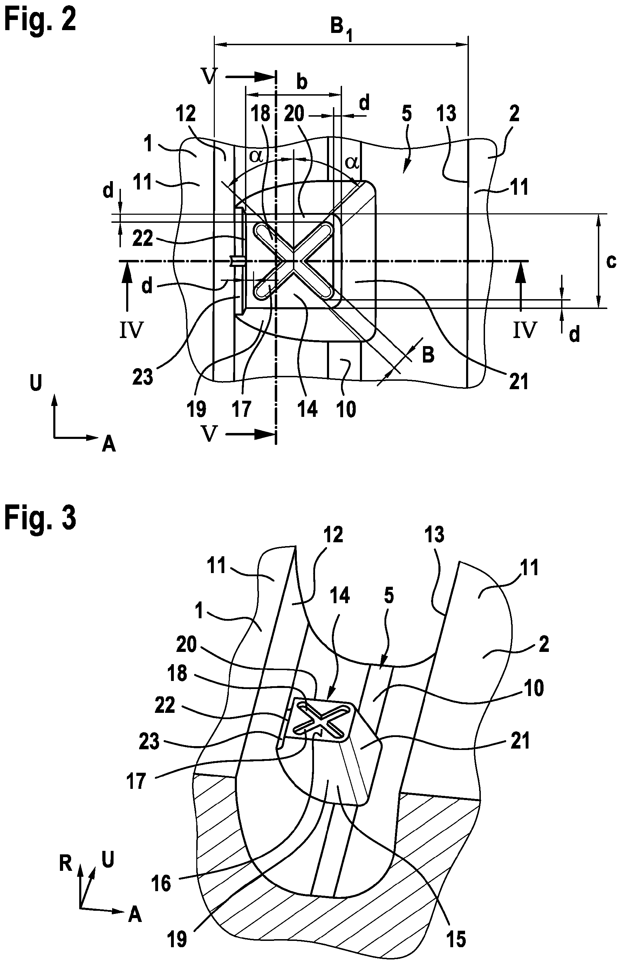

Wie am Beispiel der Umfangsrille 5 in den Figuren 1 bis 5 dargestellt ist, sind die Umfangsrillen 5, 6 und 7 in radialer Richtung R nach innen hin jeweils durch einen über den gesamten Erstreckungsverlauf der Umfangsrille 5 in Umfangsrichtung U erstreckten Rillengrund 10 begrenzt. Wie in den Figuren 2 bis 5 zu erkennen ist, ist dabei die Umfangsrille 5 in axialer Richtung A des Fahrzeugluftreifens beiderseits des Rillengrundes jeweils durch eine Rillenwand 12 bzw. 13 begrenzt, welche sich ausgehend vom Rillengrund 10 in radialer Richtung R des Fahrzeugluftreifens nach außen bis zu der radial äußeren Oberfläche 11 erstrecken. Dabei bildet die Rillenwand 12 die das Profilband 1 in axialer Richtung A zur Umfangsrille 5 hin begrenzende Profilbandflanke. Ebenso bildet die Rillenwand 13 die in axialer Richtung A zur Umfangsrille 5 hin das Profilband 2 begrenzende Flanke. Die Umfangsrille 5 ist dabei in der Position der radial äußeren Oberfläche 11 mit einer in axialer Richtung A des Fahrzeugluftreifens gemessenen Rillenbreite B₁ und mit einer in radialer Richtung R gemessenen Rillentiefe T₁ ausgebildet, welche die radiale Erstreckung zwischen dem tiefsten Punkt des Rillengrundes 10 und der radial äußeren Oberfläche 11 angibt.

Die Rillenbreite B₁ ist dabei mit 5mm ≤ B₁ ≤ 20mm ausgebildet. Die Rillentiefe T₁ ist dabei mit 5mm ≤ T₁ ≤ 15mm ausgebildet.

In den Umfangsrillen 5, 6 und 7 sind jeweils über den Umfang des Fahrzeugluftreifens verteilt Abriebindikatoren (TWI) 14 ausgebildet.

Wie in den Figuren 1 bis 5 am Beispiel eines Abriebindikators 14 der Umfangsrille 5 dargestellt ist, ist der Abriebsindikator 14 aus einem Gummiklotz 15 ausgebildet, welcher sich klotzförmig aus dem Rillengrund 10 in radialer Richtung R nach außen erstreckt und in radialer Richtung R nach außen hin von einer ebenen Fläche 16 begrenzt wird. Der Gummiklotz 15 ist in Umfangsrichtung U des Fahrzeugluftreifens zur einen Seite hin von einer Klotzflanke 20 und zur anderen Seite hin von einer Klotzflanke 19 begrenzt. Die Klotzflanke 19 erstreckt sich ausgehend vom Rillengrund 10 in radialer Richtung R nach außen bis zur Fläche 16 und schneidet diese in einer Schnittkante. Die Klotzflanke 20 erstreckt sich ebenfalls ausgehend vom Rillengrund 10 in radialer Richtung R nach außen bis zur Fläche 16 und schneidet diese ebenfalls in einer Schnittkante. Der Gummiklotz 15 ist in axialer Richtung A zum Profilband 2 hin durch eine Klotzflanke 21 begrenzt, welche sich ausgehend vom Rillengrund 10 in radialer Richtung R nach außen hin bis zur Fläche 16 erstreckt und diese in einer Schnittkante schneidet. Der Klotz 19 erstreckt sich über einen großen radialen Erstreckungsbereich angebunden an die Rillenwand 12 des Profilbandes 1 längs der radialen Erstreckung der Rillenwand 12 und ist in seinem radial äußeren Erstreckungsabschnitt zur Rillenwand 12 hin von einer Klotzflanke 22 begrenzt, welche sich in radialer Richtung R nach außen hin bis zur Fläche 16 erstreckt und diese in einer Schnittkante schneidet. Die Klotzflanke 19 und die Klotzflanke 20 sind dabei im radial inneren Erstreckungsbereich des Gummiklotzes 15 in axialer Richtung A des Fahrzeugluftreifens ausgehend von der Klotzflanke 21 bis zur Rillenwand 12 und im radial äußeren Erstreckungsabschnitt des Gummiklotzes 15 ausgehend von der Klotzflanke 21 bis zur Klotzflanke 22 erstreckt ausgebildet. Die Klotzflanken 22 und 21 erstrecken sich parallel zueinander in Umfangsrichtung U des Fahrzeugluftreifens, die Klotzflanken 19 und 20 erstrecken sich parallel zueinander in axialer Richtung A des Fahrzeugluftreifens. Im radial äußeren Erstreckungsabschnitt des Gummiklotzes 15 bildet die Flanke 22 mit der Rillenwand 12 eine schmale Nut 23, welche sich in radialer Richtung R ausgehend von der Fläche 16 nach innen hin mit einer Nuttiefe T₃ erstreckt und in der radialen Position der Fläche 16 mit einer in axialer Richtung A gemessenen Nutbreite b₃ ausgebildet ist. Die Nuttiefe T₃ ist dabei mit 0,3mm ≤ T₃ ≤ 3mm ausgebildet. Die Nutbreite b₃ ist mit 0,3mm ≤ b₃ ≤ 2mm ausgebildet. Beispielsweise ist T₃ =0,5mm und b= 0,8mm ausgebildet.

Die Fläche 16 ist durch die sie begrenzenden Schnittkanten der Klotzflanken 19, 20, 21 und 22 als rechteckförmige oder quadratische Fläche ausgebildet. Im dargestellten Ausführungsbeispiel ist die Fläche rechteckig ausgebildet, wobei die in axialer Richtung A erstreckten Schnittkanten der Klotzflanken 19 und 20 mit der Fläche 16 die längeren Seitenkanten mit den Kantenlängen b und die in Umfangsrichtung U erstreckten Schnittkanten der Flanken 20 und 21 mit der Fläche 16 die kürzeren Seitenkanten mit den Kantenlängen c des Rechtecks bilden mit b > c. Dabei ist beispielsweise b = 3 mm und c = 2,5 mm ausgebildet.

Im Gummiklotz 15 sind in der Fläche 16 zwei sich kreuzende, geradlinig erstreckte Feinstrillen 17 und 18 ausgebildet. Die Feinstrillen 17 und 18 kreuzen sich dabei in der Mitte ihrer Erstreckungslänge in der Fläche 16. Die Feinstrille 18 erstreckt sich dabei entlang der einen Diagonalen der Rechteckform der Fläche 16, und die Feinstrille 17 erstreckt sich längs der anderen Diagonalen der Rechteckform der Fläche 16. Die Feinstrille 17 endet dabei an ihrem einen, zu derjenigen Ecke des Rechtecks gerichteten Erstreckungsende, welche durch die Schnittlinien der Flanken 19 und 22 mit der Fläche 16 gebildet ist, mit Abstand d von der durch die Flanke 19 mit der Fläche 16 und mit Abstand d von der durch die Flanke 22 mit der Fläche 16 gebildeten Seitenkante des Rechtecks und mit ihrem anderen, zu derjenigen Ecke des Rechtecks gerichteten Erstreckungsende, welche durch die Schnittlinien der Flanken 20 und 21 mit der Fläche 16 gebildet ist, mit Abstand d von der durch die Flanke 20 mit der Fläche 16 und mit Abstand d von der durch die Flanke 21 mit der Fläche 16 gebildeten Seitenkante des Rechtecks.

In analoger Weise endet die Feinstrille 18 an ihrem einen, zu derjenigen Ecke des Rechtecks gerichteten Erstreckungsende, welche durch die Schnittlinien der Flanken 20 und 22 mit der Fläche 16 gebildet ist, mit Abstand d von der durch die Flanke 20 mit der Fläche 16 und mit Abstand d von der durch die Flanke 22 mit der Fläche 16 gebildeten Seitenkante des Rechtecks und mit ihrem anderen, zu derjenigen Ecke des Rechtecks gerichteten Erstreckungsende, welche durch die Schnittlinien der Flanken 21 und 19 mit der Fläche 16 gebildet ist, mit Abstand d von der durch die Flanke 21 mit der Fläche 16 und mit Abstand d von der durch die Flanke 19 mit der Fläche 16 gebildeten Seitenkante des Rechtecks.

Dabei ist der Abstand d im dargestellten Ausführungsbeispiel mit d = 0,25 mm ausgebildet. Die die x-Form bildenden, sich kreuzenden Feinstrillen 17 und 18 sind dabei mit einer von der Fläche 16 in radialer Richtung R innen hin gemessenen Tiefe T und mit einer in der Fläche 17 gemessenen Breite B ausgebildet. Die Breite B ist im dargestellten Ausführungsbeispiel mit B = 0,5mm und die Tiefe T mit T = 0,3mm ausgebildet. Die sich kreuzenden Feinstrillen 17 und 18 sind dabei in der Fläche 16 jeweils unter Einschluss eines Neigungswinkels α zur Umfangsrichtung U erstreckt verlaufend ausgebildet mit 30° ≤ α ≤ 60°, welcher in Abhängigkeit von der Rechteckform und der hierdurch bedingten diagonalen Ausrichtung gewählt ist.

In einem alternativen, nicht dargestellten Ausführungsbeispiel ist die Fläche 16 quadratisch gewählt ausgebildet, so dass b = c ist. Bei dieser Ausführung ist α = 45°.

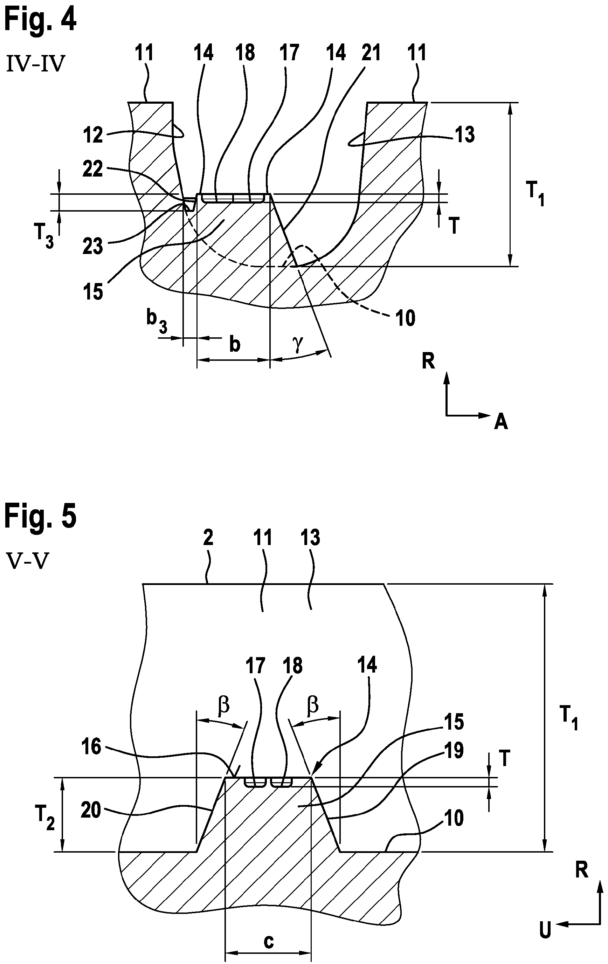

Wie in Fig.5 dargestellt ist, sind die Klotzflanken 19 und 20 in den senkrecht zur axialen Richtung A des Fahrzeugluftreifens gebildeten Schnittebenen jeweils unter Einschluss eines Neigungswinkels β zur radialen Richtung R erstreckt verlaufend ausgebildet. Die in diesen Schnittebenen gebildeten Schnittkonturen der Klotzflanken 19 und 20 sind geradlinig erstreckt. Die Neigungswinkel β sind so gewählt, dass die Schnittkonturen der Klotzflanken 19 und 20 längs ihrer Erstreckung in radialer Richtung R von innen nach außen hin zum Gummiklotz 15 hin geneigt verlaufen und somit die beiden Klotzflanken 19 und 20 eine zum Gummiblock 15 hin orientierte Neigungsrichtung aufweisen. Der Winkel β ist mit 10° ≤ β ≤ 30° gewählt. Beispielsweise ist β = 20°.

Ebenso sind, wie in Fig.4 zu erkennen ist, die Klotzflanke 21 und die Klotzflanke 22 in den die Reifenachse beinhaltenden Schnittebenen unter Einschluss eines Neigungswinkels γ zur radialen Richtung R erstreckt verlaufend ausgebildet. Die in diesen Schnittebenen gebildeten Schnittkonturen der Klotzflanken 21 und 22 sind geradlinig erstreckt. Die Neigungswinkel γ sind so gewählt, dass die Schnittkonturen der Klotzflanken 21 und 22 längs ihrer Erstreckung in radialer Richtung R von innen nach außen hin zum Gummiklotz 15 hin geneigt verlaufen und somit die beiden Klotzflanken 21 und 22 eine zum Gummiblock 15 hin orientierte Neigungsrichtung aufweisen. Der Winkel γ ist mit 10° ≤ γ ≤ 30° gewählt. Beispielsweise ist γ = 20°.

Wie in Fig.4 zu erkennen ist, erstreckt sich die Fläche 16 des Gummiklotzes 15 in axialer Richtung A ausgehend von der Flanke 22 bis zu ihrer Schnittkante mit der Flanke 21 und endet in einer Position, welche in der radialen Position der Fläche 16 in einem Abstand von der Rillenwand 13 positioniert ist, der etwa der Hälfte der Breite der Umfangsrille 5 in dieser radialen Position der Fläche 16 entspricht. Zwischen der Flanke 21 des Gummiklotzes 15 und der Rillenwand 13 verbleibt somit längs der radialen Erstreckung des Gummiklotzes 15 bis zum Rillengrund 10 ein offener Durchgangskanal.

Wie in den Figuren 1 bis 5 zu erkennen ist, sind die Schnittkanten zwischen den Klotzflanken 21 und 19 sowie zwischen den Klotzflanken 21 und 20, zwischen den Klotzflanken 20 und 22 und zwischen den Klotzflanken 22 und 19 jeweils abgerundet ausgebildet. Ebenso sind die Erstreckungsenden der Feinstrillen 17 und 18 abgerundet.

Die radiale Position der Fläche 16 mit einer in radialer Richtung R vom Rillengrund 10 gemessenen Höhe T₂ oberhalb des Rillengrundes 19 und die Tiefe T der Feinstrillen 17 und 18 sind dabei so gewählt, dass die Fläche 16 eine radiale Position der Profiltiefe angibt, in der eine Schwelle für noch zulässigen Abrieb darstellt, die bei Erreichen der die Feinstrillen 17 und 18 nach innen hin begrenzenden Feinstrillengrundes überschritten ist.

Der Nutzer des Reifens erhält mit Verschwinden des durch die Vertiefungen 17 und 18 gebildeten x-förmigen Kreuzes optisch angezeigt, dass spätestens jetzt bestimmte Fahrbedingungen - beispielsweise Nassgriff oder Schneegriff - sich deutlich verändert werden.

### Bezugszeichenliste

- 1: Profilband
- 2: Profilband
- 3: Profilband
- 4: Profilband
- 5: Umfangsrille
- 6: Umfangsrille
- 7: Umfangsrille
- 8: Querrille
- 9: Feineinschnitt
- 10: Rillengrund
- 11: Radial äußere Oberfläche
- 12: Rillenwand
- 13: Rillenwand
- 14: Abriebindikator (TWI)
- 15: Gummiklotz
- 16: Fläche
- 17: Feinstrille
- 18: Feinstrille
- 19: Klotzflanke
- 20: Klotzflanke
- 21: Klotzflanke
- 22: Klotzflanke
- 23: Nut

## Patentansprüche

1. Laufstreifenprofil eines Fahrzeugreifens - insbesondere eines Fahrzeugluftreifens - mit durch Rillen (5,6,7) voneinander getrennten Profilelementen (1,2,3,4), wobei die Rillen (5,6,7) in radialer Richtung R nach innen durch einen Rillengrund (10) und die Profilelemente (1,2,3,4) in radialer Richtung R nach außen durch eine die Bodenkontaktfläche bildende radial äußere Oberfläche (11) begrenzt werden, mit Rillen (5), in denen wenigstens ein Abriebindikator (TWI) (14) ausgebildet ist, wobei der Abriebindikator (14) aus einem aus dem Rillengrund (10) in radialer Richtung R nach außen erstreckten Gummiklotz (15) mit einer den Gummiklotz (15) in radialer Richtung R nach radial außen hin begrenzenden Fläche (16) und mit einer in der Fläche (16) ausgebildeten, eine Schwelle des Abrieb anzeigenden X-förmigen Linie ausgebildet ist,
wobei die X-förmige Linie des Abriebindikators (14) eine in der den Gummiklotz (15) begrenzenden Fläche (16) ausgebildete nutförmige Vertiefung (17,18) ist,
**dadurch gekennzeichnet,**
**dass** der Gummiklotz (15) in Umfangsrichtung U des Fahrzeugreifens mit Klotzflanken (19,20) begrenzt wird, welche in den senkrecht zur axialen Richtung A hin gebildeten Schnittebenen jeweils in radialer Richtung R unter Einschluss eines Neigungswinkels β zur radialen Richtung R mit 10°≤β≤ 30° aus dem Rillengrund (10) nach außen bis zur Fläche (16) erstrecken und dort die die Fläche (16) in Umfangsrichtung U begrenzenden Randlinie bilden, und dass die Neigungsrichtung der beiden Klotzflanken (19,20) längs deren radialer Erstreckung R nach außen hin jeweils zum Gummiklotz (15) hin orientiert ist.

2. Laufstreifenprofil gemäß den Merkmalen von Anspruch 1,
wobei die X-förmige Linie aus zwei sich kreuzenden Nuten (17,18) gebildet ist, deren Erstreckungsende jeweils mit Abstand d zu die Fläche (16) begrenzenden Rändern ausgebildet sind.

3. Laufstreifenprofil gemäß den Merkmalen von Anspruch 1 oder 2,
wobei die Fläche (16) im Wesentlichen rechteckig oder quadratisch ausgebildet ist und
wobei die die X-Form bildenden Linien sich längs der Diagonalen des Rechtecks bzw. des Quadrats erstrecken.

4. Laufstreifenprofil gemäß den Merkmalen von einem oder mehreren der vorangegangenen Ansprüche,
wobei die Fläche (16) im Wesentlichen rechteckig ausgebildet ist, wobei die längere Haupterstreckungsrichtung des Rechtecks in axialer Richtung A des Fahrzeugreifens und die kürzere Haupterstreckungsrichtung des Rechtecks in Umfangsrichtung U des Fahrzeugreifens ausgerichtet ist.

5. Laufstreifenprofil gemäß den Merkmalen von einem oder mehreren der Ansprüche 2 bis 4,
wobei die die X-Form bildenden, sich kreuzenden Nuten (17,18) mit ihrer Erstreckungsrichtung in der Fläche (16) jeweils unter Einschluss eines Winkels α zur Umfangsrichtung U mit 30°≤α≤60° ausgerichtet sind.

6. Laufstreifenprofil gemäß den Merkmalen von einem oder mehreren der vorangegangenen Ansprüche,
wobei der Abriebindikator (TWI) (14) in einer Umfangsrille (5) ausgebildet ist.

## Claims

1. Tread profile of a vehicle tyre - in particular a pneumatic vehicle tyre - with profile elements (1, 2, 3, 4) separated from one another by grooves (5, 6, 7), wherein the grooves (5, 6, 7) are delimited inwards in the radial direction R by a groove base (10) and the profile elements (1, 2, 3, 4) are delimited outwards in the radial direction R by a radially outer surface (11), forming the ground contact surface, with grooves (5), in which at least one abrasion indicator (TWI) (14) is formed, wherein the abrasion indicator (14) is formed by a rubber block (15), which extends from the groove base (10) outwards in the radial direction R and has a surface (16) delimiting the rubber block (15) radially outwards in the radial direction R and an X-shaped line which is formed in the surface (16) and indicates an abrasion threshold,
wherein the X-shaped line of the abrasion indicator (14) is a notch-shaped depression (17, 18) formed in the surface (16) delimiting the rubber block (15),
**characterized**
**in that** the rubber block (15) is delimited in the circumferential direction U of the vehicle tyre by block flanks (19, 20), which in the sectional planes formed perpendicularly to the axial direction A respectively extend from the groove base (10) outwards in the radial direction R up to the surface (16), while forming an angle of inclination β in relation to the radial direction R, where 10°≤β≤30°, and form there the peripheral line delimiting the surface (16) in the circumferential direction U, and in that the angle of inclination of the two block flanks (19, 20) is oriented outwards along their radial extent R respectively towards the rubber block (15).

2. Tread profile according to the features of Claim 1,
wherein the X-shaped line is formed by two crossing notches (17, 18), the end of the extent of which is formed in each case at a distance d from the peripheries delimiting the surface (16).

3. Tread profile according to the features of Claim 1 or 2,
wherein the surface (16) is formed in a substantially rectangular or square manner and
wherein the lines forming the X shape extend along the diagonals of the rectangle or the square.

4. Tread profile according to the features of one or more of the preceding claims,
wherein the surface (16) is formed in a substantially rectangular manner, wherein the longer main direction of extent of the rectangle is aligned in the axial direction A of the vehicle tyre and the shorter main direction of extent of the rectangle is aligned in the circumferential direction U of the vehicle tyre.

5. Tread profile according to the features of one or more of Claims 2 to 4,
wherein the crossing notches (17, 18) forming the X shape are aligned in each case with their direction of extent in the surface (16), while forming an angle α in relation to the circumferential direction U, where 30°≤α≤60°.

6. Tread profile according to the features of one or more of the preceding claims,
wherein the abrasion indicator (TWI) (14) is formed in a circumferential groove (5).

## Revendications

1. Profil de bande de roulement d'un bandage de véhicule, notamment d'un bandage pneumatique de véhicule, comprenant des éléments profilés (1, 2, 3, 4) séparés les uns des autres par des rainures (5, 6, 7), les rainures (5, 6, 7) étant délimitées dans la direction radiale R vers l'intérieur par un fond de rainure (10) et les éléments profilés (1, 2, 3, 4) étant délimités dans la direction radiale R vers l'extérieur par une surface radialement extérieure (11) qui forme la surface de contact au sol, comprenant des rainures (5) dans lesquelles est formé au moins un indicateur d'usure (TWI) (14), l'indicateur d'usure (14) étant formé par un bloc de caoutchouc (15) qui s'étend dans la direction radiale R vers l'extérieur à partir du fond de rainure (10), ayant une surface (16) qui délimite le bloc de caoutchouc (15) dans la direction radiale R vers l'extérieur dans la direction radiale, et pourvu d'une ligne en forme de X formée dans la surface (16) indiquant un seuil de l'usure,
la ligne en forme de X de l'indicateur d'usure (14) étant une empreinte (17, 18) en forme d'encoche formée dans la surface (16) de délimitation du bloc de caoutchouc (15), **caractérisé en ce**
**que** le bloc de caoutchouc (15) est délimité par des flancs de bloc (19, 20) dans la direction périphérique U du bandage de véhicule, lesquels s'étendent dans les plans de coupe formés perpendiculairement à la direction axiale A, respectivement dans la direction radiale R en formant un angle d'inclinaison β par rapport à la direction radiale R avec 10° ≤ β ≤ 30°, depuis le fond de rainure (10) vers l'extérieur jusqu'à la surface (16) et y forment la ligne de bordure qui délimite la surface (16) dans la direction périphérique U, et
**que** le sens d'inclinaison des deux flancs de bloc (19, 20) le long de leur projection radiale R vers l'extérieur est respectivement orienté vers le bloc de caoutchouc (15).

2. Profil de bande de roulement selon les caractéristiques de la revendication 1, la ligne en forme de X étant constituée de deux encoches (17, 18) qui se croisent, dont les extrémités de projection sont respectivement formées avec un écart d par rapport aux bords qui délimitent la surface (16).

3. Profil de bande de roulement selon les caractéristiques de la revendication 1 ou 2, la surface (16) étant de configuration sensiblement rectangulaire ou carrée et les lignes qui forment la forme de X s'étendant le long des diagonales du rectangle ou du carré.

4. Profil de bande de roulement selon les caractéristiques d'une ou plusieurs des revendications précédentes, la surface (16) étant de configuration sensiblement rectangulaire, le sens de projection principal le plus long du rectangle étant orienté dans la direction axiale A du bandage de véhicule et le sens de projection principal le plus court du rectangle dans la direction périphérique U du bandage de véhicule.

5. Profil de bande de roulement selon les caractéristiques d'une ou plusieurs des revendications 2 à 4, les encoches (17, 18) qui se croisent en formant la forme de X étant orientées avec leur sens de projection dans la surface (16) respectivement en formant un angle α par rapport à la direction périphérique U avec 30° ≤ α ≤ 60°.

6. Profil de bande de roulement selon les caractéristiques d'une ou plusieurs des revendications précédentes, l'indicateur d'usure (TWI) (14) étant formé dans une rainure périphérique (5).
